# EUROPEAN PATENT APPLICATION

(11) **EP 4 239 022 A1**
(43) Date of publication of application: **06.09.2023**
(21) Application number: 21886362.9
(22) Date of filing: 29.10.2021
(51) Int. Cl.: C08K 5/5419, C08K 5/56, C08K 9/10, C08L 83/05, C08L 83/07, C08K 3/11

(54) **CURABLE FLUOROSILICONE COMPOSITION**

(30) Priority: 29.10.2020 JP 2020181636
(71) Applicant: Dow Toray Co., Ltd., Tokyo 140-8617 (JP)
(72) Inventor: FUKUI, Hiroshi, Ichihara-shi, Chiba 299-0108 (JP); TOYAMA, Kyoko, Ichihara-shi, Chiba 299-0108 (JP)
(74) Representative: Murgitroyd & Company
(86) International application number: PCT/JP2021/039933
(87) International publication number: WO 2022/092245

(57) **Abstract**

A curable fluorosilicone composition of the present invention comprises: (A) an organopolysiloxane having at least two alkenyl groups and at least one fluoroalkyl group in a molecule; (B) an organopolysiloxane having at least two silicon atom-bonded hydrogen atoms and at least one fluoroalkyl group in a molecule; (C) a platinum group metal-based catalyst for hydrosilylation reaction; and (D) a hydrosilylation reaction inhibitor having an aliphatic unsaturated bond; wherein component (C) is an encapsulation type catalyst having an acrylic resin as a wall material, and the platinum group metals in component (C) relative to the present composition are 0.1 to 100 ppm, and the molar ratio of the aliphatic unsaturated bonds in component (D) relative to the platinum group metals in component (C) is 1 to 100. The composition is charcterized by having favorable curability and a sufficiently pot life at room temperature.

## Description

### TECHNICAL FIELD

The present invention relates to a curable fluorosilicone composition.

### BACKGROUND ART

Curable fluorosilicone compositions that cure by an addition reaction in the presence of a platinum group metal based catalyst for hydrosilylation reaction are used as encapsulants for electrical and electronic components because when cured they form silicone cured products with superior cold resistance and solvent resistance (see Patent Documents 1 and 2). These curable fluorosilicone compositions have a slow curing speed, and when a satisfactory curing speed is attempted, the pot life at room temperature is dramatically shortened.

Therefore, Patent Document 3 proposes a method of controlling the cure initiation time and cure time of a curable fluorosilicone composition by blending a crosslinking agent mixture including an alkylhydrogensiloxane containing a fluoroalkyl group.

On the other hand, Patent Documents 4 and 5 disclose a method of improving the storage stability and curability of a curable silicone composition by using an encapsulation type catalyst with a thermoplastic resin as a wall material and an encapsulated platinum group metal based catalyst for hydrosilylation reaction. However, in curable fluorosilicone compositions, the fact that use of an encapsulation type catalyst with an acrylic resin as a wall material can improve the pot life of said compositions at room temperature is not known.

### Prior Art Documents

### Patent Documents

Patent Document 1: Japanese Patent Application Publication No. H05-070693
Patent Document 2: Japanese Patent Application Publication No. H07-070444
Patent Document 3: Japanese Patent Application Publication No. H10-081825
Patent Document 4: Japanese Patent Application Publication No. S64-045468
Patent Document 5: Japanese Patent Application Publication No. H02-117960

### BRIEF SUMMARY OF THE INVENTION

### Technical Problem

An object of the present invention is to provide a curable fluorosilicone composition having favorable curability and a sufficient pot life at room temperature.

### Solution to Problem

The curable fluorosilicone composition of the present invention comprises:
(A) 100 parts by mass of an organopolysiloxane having at least two alkenyl groups and at least one fluoroalkyl group having 3 to 12 carbon atoms in a molecule;
(B) an organopolysiloxane having at least two silicon atom-bonded hydrogen atoms and at least one fluoroalkyl group having 3 to 12 carbon atoms in a molecule, in an amount such that the amount of silicon atom-bonded hydrogen atoms in this component is 0.1 to 10 moles relative to 1 mole of a total of aliphatic unsaturated bonds in the present composition;
(C) a platinum group metal-based catalyst for hydrosilylation reaction; and
(D) a hydrosilylation reaction inhibitor having an aliphatic unsaturated bond;
wherein component (C) is an encapsulation type catalyst having an acrylic resin as a wall material, and the amount of platinum group metals in component (C) of the present composition is 0.1 to 100 ppm by mass, and the molar ratio of the aliphatic unsaturated bond in component (D) to the platinum group metals in component (C) is 1 to 100.

In various embodiments, component (A) includes a branched-chain organopolysiloxane having alkenyl groups bonded only to silicon atoms at the molecular chain terminals.

In various embodiments, component (B) includes an organopolysiloxane having hydrogen atoms bonded only to silicon atoms at the molecular chain terminals, and in particular, the organopolysiloxane is a mixture of a straight-chain organopolysiloxane having hydrogen atoms bonded only to silicon atoms at both molecular chain terminals and a branched-chain organopolysiloxane having hydrogen atoms bonded only to silicon atoms at the molecular chain terminals.

In various embodiments, component (D) is a silylated acetylene compound, and in particular a silylated acetylene compound represented by the following general formula: 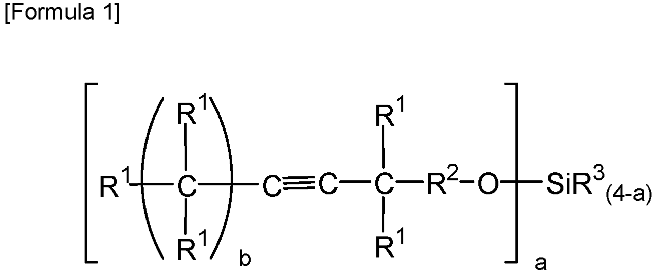
(in the formula, R¹s are the same or different, hydrogen atoms or monovalent hydrocarbon groups, R² is a linking group or an alkylene group, R³ is an alkyl group, an alkenyl group, or an aryl group, "a" is an integer from 1 to 4, and "b" is an integer from 0 to 5.), a silylated acetylene compound represented by the following general formula: 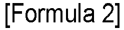 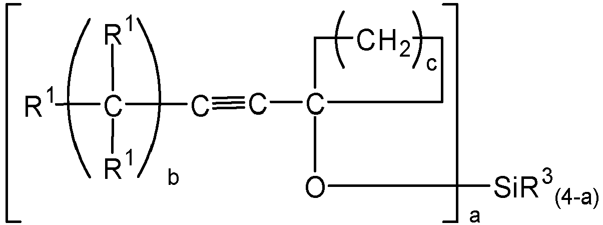
(in the formula, R¹, R³, "a", and "b" are the same as described above, and "c" is an integer from 4 to 6)
or a mixture thereof.

### Effects of Invention

The curable fluorosilicone composition of the present invention is characterized by having favorable curability and a sufficient pot life at room temperature.

### DETAILED DESCRIPTION OF THE INVENTION

### Definitions

In this specification, the term "encapsulation type catalyst" means a resin particle having a thermoplastic acrylic resin as a wall material, containing or dispersing a platinum group metal catalyst for hydrosilylation reaction inside the resin particle, which normally does not promote or does not readily promote the hydrosilylation reaction, and a catalyst that dramatically promotes a hydrosilylation reaction when heated above the glass transfer point thereof.

In this specification, "aliphatic unsaturated bond" is a generic term for aliphatic carbon-carbon double bonds and aliphatic carbon-carbon triple bonds.

Further, in this specification, "silylated acetylene compound" means an acetylene compound having a silyl group, such as a reaction product in which a hydroxyl group in an acetylene alcohol is replaced with a siloxy group as disclosed in U.S. Patent No. 5,449,802 and U.S. Patent No. 5,708,046.

### <Curable Fluorosilicone Composition>

Component (A) is a base compound of the composition and is an organopolysiloxane having at least two alkenyl groups and at least one fluoroalkyl group having 3 to 12 carbon atoms in a molecule. Examples of the alkenyl groups in component (A) include: vinyl groups, allyl groups, butenyl groups, pentenyl groups, hexenyl groups, heptenyl groups, octenyl groups, nonenyl groups, decenyl groups, and other alkenyl groups having 2 to 12 carbon atoms. However, vinyl groups and hexenyl groups are preferred. Examples of the fluoroalkyl groups in component (A) include: 3,3,3-trifluoro-propyl groups, 4,4,4,3,3-pentafluorobutyl groups, 5,5,5,4,4,3,3-heptafluoropentyl groups, 6,6,6,5,5,4,4,3,3-nonafluorohexyl groups, and 7,7,7,6,6,5,5,4,4,3,3-undecafluoroheptyl groups; and 3,3,3-trifluoropropyl groups are preferable. Furthermore, examples of groups bonded to the silicon atom other than the alkenyl group and the fluoroalkyl group in component (A) include, alkyl groups having 1 to 12 carbon atoms such as methyl groups, ethyl groups, propyl groups, butyl groups, pentyl groups, hexyl groups, heptyl groups, and the like; aryl groups having 6 to 12 carbon atoms such as phenyl groups, tolyl groups, xylyl groups, and the like; aralkyl groups having 7 to 12 carbon atoms, such as benzyl groups, phenethyl groups, and the like, and methyl groups or phenyl groups are preferable. Furthermore, a small amount of hydroxyl groups, or methoxy groups, ethoxy groups, or other alkoxy groups may be bonded to the silicon atom in component (A) within a scope that does not impair an object of the present invention.

The molecular structure of component (A) is not limited, and examples include: a straight-chain, a branched-chain, a partially branched straight-chain, and a resinoid, and straight-chain or branched-chain are preferable. Furthermore, the viscosity of component (A) at 25°C is not limited, but is preferably within a range of 100 to 100,000 mPa·s or within a range of 500 to 50,000 mPa·s. This is because, if the viscosity of component (A) is equal to or above the lower limit of the range described above, the mechanical strength of the resulting fluorosilicone cured product is improved, while if the viscosity is equal to or below the upper limit of the range described above, the workability and filling properties of the composition are improved. The viscosity of component (A) can be measured by a rotational viscometer or a rotational rheometer in accordance with JIS K7117-2:1999 "Plastics - Liquid, emulsion or dispersed resins - Method of measuring viscosity at constant shear rate by rotational viscometer."

Examples of such component (A) include: copolymers of dimethylsiloxane, methyl(3,3,3-trifluoropropyl)siloxane capped at both molecular chain terminals with dimethylvinylsiloxy groups; copolymers of dimethylsiloxane, methylvinylsiloxane and methyl(3,3,3-trifluoropropyl)siloxane capped at both molecular chain terminals with dimethylvinylsiloxy groups; copolymers of dimethylsiloxane, methylphenylsiloxane and methyl(3,3,3-trifluoropropyl)siloxane capped at both molecular chain terminals with dimethylvinylsiloxy groups; copolymers of methyl(3,3,3-trifluoropropyl)siloxane and methylvinylsiloxane capped at both molecular chain terminals with trimethylsiloxy groups; and mixtures of two or more of these. In addition, containing a branched-chain organopolysiloxane having an alkenyl group bonded only to a silicon atom at the molecular chain treminal is preferable.

Component (B) is a crosslinking agent of the present composition and is an organopolysiloxane having at least two silicon atom-bonded hydrogen atoms and at least one fluoroalkyl group having 3 to 12 carbon atoms in a molecule. In addition, examples of the fluoroalkyl groups in component (B) include 3,3,3-trifluoro-propyl groups, 4,4,4,3,3-pentafluorobutyl groups, 5,5,5,4,4,3,3-heptafluoropentyl groups, 6,6,6,5,5,4,4,3,3-nonafluorohexyl groups, 7,7,7,6,6,5,5,4,4,3,3-undecafluoroheptyl groups, and preferably 3,3,3-trifluoropropyl groups. Furthermore, examples of groups bonded to a silicon atom other than the hydrogen atoms and fluoroalkyl groups in component (B) include: alkyl groups having 1 to 12 carbon atoms such as methyl groups, ethyl groups, or propyl groups; aryl groups having 6 to 12 carbon atoms such as phenyl groups, tolyl groups, or xylyl groups. Methyl groups and phenyl groups are preferred.

The molecular structure of component (B) is not limited, and examples include straight chain structures, branched chain structures, partially branched straight chain structures, cyclic structures, and resinoid structures. The viscosity of component (B) is not limited, but preferably the kinematic viscosity at 25°C is within a range of 1 to 10,000 mm²/s, or 1 to 2,000 mm²/s. This is because, if the viscosity of component (B) is equal to or above the lower limit of the range described above, the mechanical strength of the resulting fluorosilicone cured product is enhanced; on the other hand, if the viscosity is equal to or below the upper limit of the range described above, the handling workability and filling properties of the present composition are enhanced. The viscosity of component (B) can be measured by a viscometer in accordance with JIS K2283:2000 "Crude petroleum and petroleum products-Determination of kinematic viscosity and calculation of viscosity index from kinematic viscosity."

Examples of component (B) include, copolymers of methylhydrogensiloxane and methyl(3,3,3-trifluoropropyl)siloxane capped at both molecular chain terminals with trimethylsiloxy groups; copolymers of dimethylsiloxane, methylhydrogensiloxane and methyl(3,3,3-trifluoropropyl)siloxane capped at both molecular chain terminals with trimethylsiloxy groups; methyl(3,3,3-trifluoropropyl)polysiloxane capped at both molecular chain terminals with dimethylhydrogensiloxy groups; and copolymers of dimethylsiloxane, methylhydrogensiloxane and methyl(3,3,3-trifluoropropyl)siloxane capped at both molecular chain terminals with dimethylhydrogensiloxy groups; or mixtures of two or more of these, preferably including an organopolysiloxane having hydrogen atoms bonded only to silicon atoms capping both molecular chain terminals, and in particular, a mixture of a straight-chain organopolysiloxane having hydrogen atoms bonded only to silicon atoms capping both molecular chain terminals and a branched-chain organopolysiloxane having hydrogen atoms bonded only to silicon atoms capping a molecular chain terminal is preferable.

The amount of component (B) is an amount such that silicon atom-bonded hydrogen atoms in this component is in a range of 0.1 to 10 moles, preferably in a range of 0.1 to 5 moles, in a range of 0.5 to 5 moles, or in a range of 0.5 to 3 moles, relative to 1 mole of a total of aliphatic unsaturated bonds in the present composition. This is because the present composition is sufficiently cured when the amount of component (B) is equal to or above the lower limit of the range described above, while the heat resistance of the resulting fluorosilicone cured product is enhanced when the amount of component (B) is equal to or below the upper limit of the range described above.

Component (C) is an encapsulation type platinum group metal-based catalyst for hydrosilylation reaction for promoting curing of the present composition, and having an acrylic resin as a wall material. Examples of the platinum metal-type catalyst in component (C) include platinum catalysts, rhodium catalysts, ruthenium catalysts, iridium catalysts, palladium catalysts, and the like, but platinum catalysts are preferred. Examples of the platinum catalysts are platinum chloride, platinum chloride hexahydrate, platinum dichloride, alcoholic solutions of platinum chloride, olefin complexes of platinum chloride, platinum chloride and alkenylsiloxane complexes, diketone complexes of platinum, alkenylsiloxane complexes of platinum, and olefin complexes of platinum. Alkenylsiloxane complexes are preferred, and in particular, 1,3-diethynyl-1,1,3,3-tetramethyldisiloxane complexes of platinum.

The acrylic resin which is the wall material of component (C) is not restricted, and examples thereof include polymethacrylate resin, polyacrylic resin, polyacrylamide resin, and acrylic/styrene copolymer resin, but polymethacrylate resins are preferable, such as polymethylmethacrylate resin, methylmethacrylate and butyl methacrylate copolymer resin, and the like. Component (C) preferably has a glass transition point in a range of 50 to 100°C. The glass transition point can be determined by the method described in JIS K7121-1987, "Method for Measuring the Transition Temperature of Plastics".

The method for preparing the component (C) is not restricted, and for example, as proposed in Japanese Patent Application Publication Nos. S64-045468 and S64-047442, the platinum group metal catalyst for hydrosilylation reaction can be dispersed in a solution of acrylic resin, and then dispersed in water to produce an encapsulation type catalyst. Alternatively, as proposed in Japanese Patent Application Publication Nos. H02-009440 and H02-117960, the platinum group metal catalyst for hydrosilylation reaction can be dispersed in acrylic monomer and then emulsified in water to polymerize the acrylic monomer and produce an encapsulation type catalyst.

Component (D) is a hydrosilylation reaction inhibitor having an aliphatic unsaturated bond to improve the storage stability of the composition or to adjust the curability of the composition. Examples of such component (D) include acetylene alcohols such as 1-ethynylcyclohexan-1-ol, 2-methyl-3-butyn-2-ol, 3,5-dimethyl-1-hexyn-3-ol, 2-phenyl-3-butyn-2-ol; and the like; enyne compounds such as 3-methyl-3-penten-1-yne, 3,5-dimethyl-3-hexen-1-yne, and the like; and silylated acetylene compounds in which the hydroxyl group of one of the aforementioned acetylene alcohols is replaced with a siloxy group, but a silylated acetylene compound is preferable.

These types of silylated acetylene compound for component (D) are disclosed, for example, in U.S. Patent No. 5,449,802 and U.S. Patent No. 5,708,046, and examples include a silylated acetylene compound represented by the following general formula: 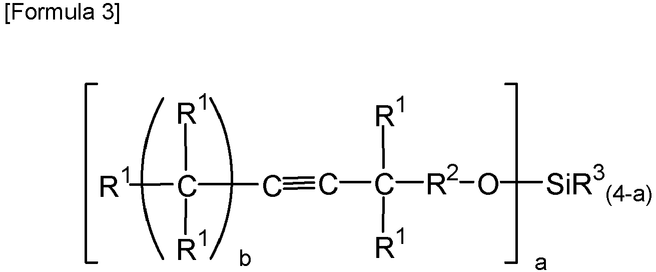 a silylated acetylene compound represented by the following general formula: 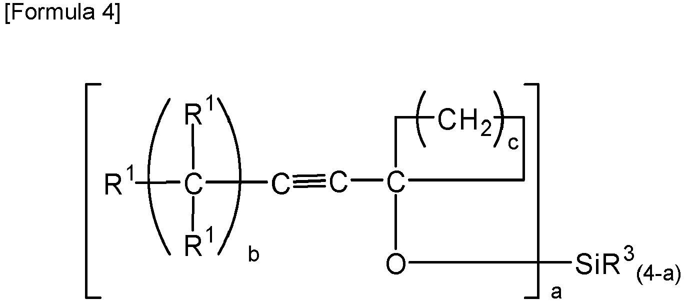 or a mixture thereof.

In the formula, R¹s are the same or different, hydrogen atoms or monovalent hydrocarbon groups. Examples of the monovalent hydrocarbon groups for R¹ include alkyl groups having 1 to 12 carbon atoms such as methyl groups, ethyl groups, propyl groups, butyl groups, pentyl groups, hexyl groups, and heptyl groups; aryl groups having 6 to 12 carbon atoms such as phenyl groups, tolyl groups, and xylyl groups; alkyl groups having 7 to 12 carbon atoms such as benzyl groups and phenethyl groups, but methyl groups are preferable.

In the formula, R² is a linking group or an alkylene group. Examples of the alkylene groups for R² include alkylene groups having 1 to 12 carbon atoms, such as methylene groups, ethylene groups, propylene groups, butylene groups, pentylene groups, hexylene groups, heptylene groups, or the like. R² is preferably a linking group.

In the formula, R³ is an alkyl group, an alkenyl group, or an aryl group. Examples of the alkyl groups for R³ include alkyl groups having 1 to 12 carbon atoms, such as methyl groups, ethyl groups, propyl groups, butyl groups, pentyl groups, hexyl groups, heptyl groups, and the like. Examples of the alkenyl groups for R³ include alkenyl groups having 2 to 12 carbon atoms, such as vinyl groups, allyl groups, butenyl groups, pentenyl groups, hexenyl groups, heptenyl groups, and the like. Examples of the aryl groups of R³ are aryl groups having 6 to 12 carbon atoms, such as phenyl groups, tolyl groups, xylyl groups, and the like.

In the formulas, "a" is an integer from 1 to 4, preferably 3 or 4.

In the formulas, "b" is an integer from 0 to 5, and preferably is 0.

In the formula, "c" is an integer from 4 to 6, and preferably is 5.

The following compounds are examples of the silylated acetylene compound for component (D).

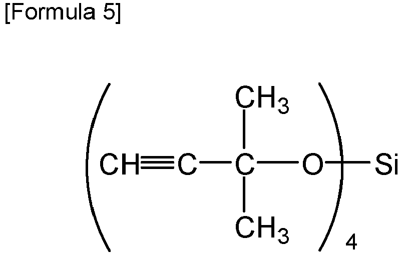

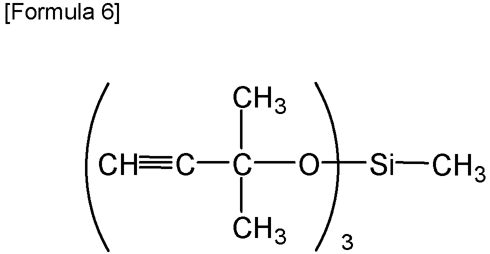

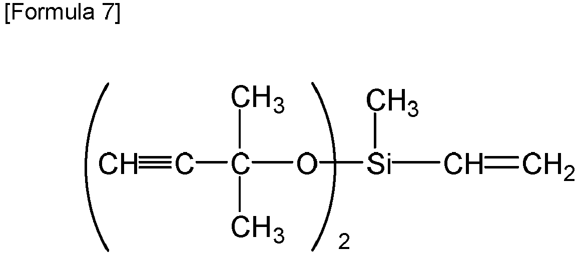

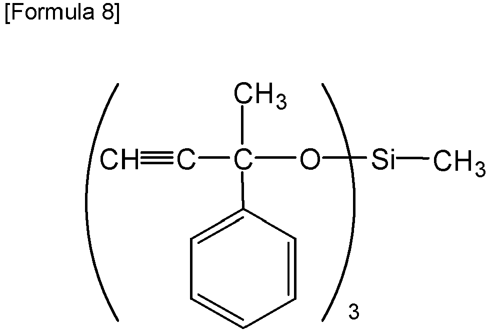

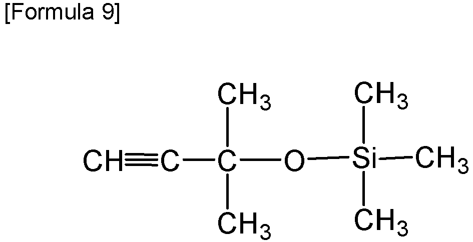

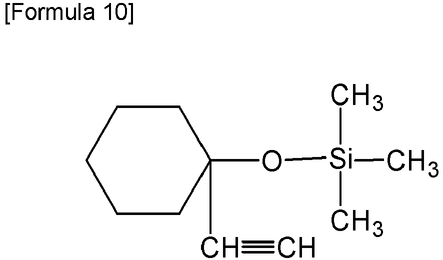

The method for preparing the silylated acetylene compound for component (D) is known, for example, as disclosed in U.S. Patent No. 5,449,802 and U.S. Patent No. 5,708,046, and component (D) can be prepared by a condensation reaction of acetylene alcohol represented by the following general formula: 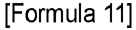 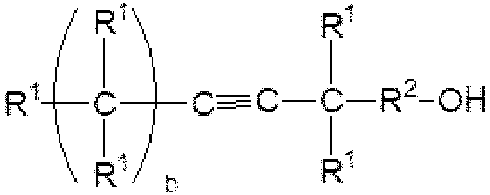 acetylene alcohol represented by the following general formula: 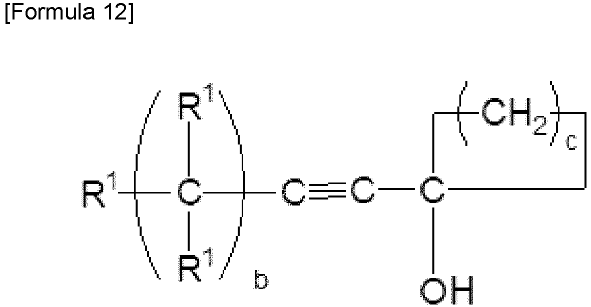 and chlorosilane represnted by the following general formula:

X_{d}SiR³ _{(4-d)}.

In the above formulas, R¹, R², R³, "b", and "c" are the same as described above. In the above formula, X is a hydrolyzable group, and examples include alkoxy groups such as methoxy groups, ethoxy groups, propoxy groups, or the like; halogen atoms such as chlorine atoms or the like; or acetoxy groups. Furthermore, in the formula, "d" is an integer of 1 to 4, preferably 2 or 3.

The amount of component (C) and component (D) contained in the present composition is, relative to the present composition, an amount in which the platinum group metals in component (C) are 0.1 to 100 ppm by mass and the molar ratio of the aliphatic unsaturated bonds in component (D) relative to the platinum group metals in component (C) is 1 to 100. Preferably, an amount where the platinum group metals in component (C) is 0.1 to 50 ppm by mass, and the molar ratio of the aliphatic unsaturated bonds in component (D) relative to the platinum group metals in component (C) is 1 to 50. This is because, when the amount of component (C) is equal to or above the lower limit of the range described above, curing of the present composition proceeds sufficiently, while, when the amount is equal to or below the upper limit of the range described above, the resulting fluorosilicone cured product is less likely to be colored. If the amount of component (D) is equal to or above the lower limit of the range described above, the pot life of the present composition at room temperature will be sufficient, and if the amount of component (D) is equal to or below the upper limit of the range described above, the curability of the present composition will be favorable.

The composition may also contain, as an optional component, an adhesion-promoting agent for the purpose of improving the adhesion of the resulting fluorosilicone cured product. An organosilicon compound having at least one alkoxy group bonded to a silicon atom in a molecule is preferable as the adhesion promoting agent. Examples of thes alkoxy groups include methoxy groups, ethoxy groups, propoxy groups, butoxy groups, and methoxyethoxy groups, with methoxy groups particularly preferable. Moreover, examples of groups other than the alkoxy groups bonded to the silicon atoms of the organosilicon compound include: substituted or unsubstituted monovalent hydrocarbon groups such as alkyl groups, alkenyl groups, aryl groups, aralkyl groups, and halogenated alkyl groups; monovalent organic groups containing an epoxy group such as 3-glycidoxypropyl groups, 4-glycidoxybutyl groups, or similar glycidoxyalkyl groups; 2-(3,4-epoxycyclohexyl)ethyl groups, 3-(3,4-epoxycyclohexyl)propyl groups, or similar epoxycyclohexylalkyl groups; 4-oxylanylbutyl groups, 8-oxylanyloctyl groups, or similar oxylanylalkyl groups; and monovalent organic groups containing an acrylic group such as 3-methacryloxypropyl groups; hydrogen atoms; and the like. The organosilicon compound preferably has silicon bonded alkenyl groups or silicon bonded hydrogen atoms. Moreover, because favorable adhesion can be imparted to various substrates, this organic silicon compound preferably has at least one epoxy group-containing monovalent organic group in a molecule. Examples of such an organosilicon compound include an organosilane compound, an organosiloxane oligomer, and an alkyl silicate. Examples of molecular structures of this organosiloxane oligomer or alkyl silicate include a linear structure, a partially branched linear structure, a branched structure, a cyclic structure, and a network structure, among which a linear structure, a branched structure, and a network structure are particularly preferable. Examples of such an organosilicon compound include: silane compounds such as 3-glycidoxypropyltrimethoxysilane, 2-(3,4-epoxycyclohexyl)ethyltrimethoxysilane, and 3-methacryloxypropyltrimethoxysilane; siloxane compounds having at least one of silicon bonded alkenyl groups and silicon bonded hydrogen atoms, and at least one silicon bonded alkoxy group in a molecule; and mixtures of a silane compound or siloxane compound having at least one silicon bonded alkoxy group and a siloxane compound having at least one silicon bonded hydroxyl group and at least one silicon bonded alkenyl group in a molecule; methylpolysilicate; ethylpolysilicate; and an epoxy group-containing ethylpolysilicate. The amount of the adhesion promoting agent is not particularly limited, but should be at most 5 mass% relative to the present composition.

Metal compounds such as copper acetylacetonate and copper phthalocyanine may be added to the present composition as other optional components for the purpose of improving the heat resistance, cold resistance, or weather resistance of the resulting fluorosilicone cured product. The amount of such metal compound is not limited, but should be at most 100 ppm or at most 50 ppm by mass relative to the present composition.

The present composition may also contain, as an optional component, an organopolysiloxane having a fluoroalkyl group with 3 to 12 carbon atoms, without having an alkenyl group and a hydrogen atom at the silicon atom in the molecule. The organopolysiloxane includes, for example, a copolymer of dimethylsiloxane and methyl(3,3,3-trifluoropropyl)siloxane capped at both molecular chain terminals with trimethylsiloxy groups, a methyl(3,3,3-trifluoropropyl)polysiloxane capped at both molecular chain terminals with trimethylsiloxy groups, and a mixture of two or more of these. The viscosity of the organopolysiloxane at 25°C is not restricted, but is preferably in a range of 100 to 100,000 mPa·s or 500 to 50,000 mPa s. The amount of the organopolysiloxane is not restricted, but should be at most 5 mas% of the present composition.

Further, the present composition may contain fillers to the extent that the purpose of the present invention is not impaired. Examples of fillers include: reinforcing fillers such as fumed silica, fused silica, and sedimented silica; bulking fillers such as quartz powder, diatomaceous earth, calcium carbonate, magnesium carbonate; heat-resistant additives such as cerium oxide, cerium hydroxide, and iron oxide; pigments such as red iron oxide, titanium oxide, carbon black; and flame retardants.

### Examples

The curable fluorosilicone composition of the present invention will be described in detail by examples. Note that the viscosity values in the examples are values at 25°C. The pot life of the curable fluorosilicone composition at 25°C and the curability were measured as follows.

### <Ratio of viscosity after specific day to initial viscosity>

The initial viscosity (mPa s) of the curable fluorosilicone composition immediately after preparation at 25°C, and the viscosity (mPa s) of the curable fluorosilicone composition after standing at 25°C for 7 days and 21 days, respectively, were measured using a rotational rheometer (Anton Paar, Inc. MCR102 or 302) in accordance with the method specified in JIS K7117-2:1999. For this measurement, a cone plate with a diameter of 20 mm and 2° was used, and the shear rate was set at 10.0 (S⁻¹). The ratio of the viscosity after a specified day to the initial viscosity was determined.

### <Curing properties of curable fluorosilicone composition>

The curable fluorosilicone composition was heated at 150°C for 1 hour to produce a cured product with a thickness of approximately 1.5 mm and a diameter of 15 mm. The shear modulus G' (Pa) of the cured product at 23°C was measured using a viscoelasticity measuring device (manufactured by Anton Paar, model number MCR302). The values were measured at an angular velocity of 6.28×10⁻² to 6.28×10¹ rad/s, and the value at 1.25×10⁻¹ rad/s was determined.

### <Examples 1-2, Comparative Examples 1-4>

A curable fluorosilicone composition was prepared by uniformly mixing the following components to achieve the composition shown in Table 1. The molar ratio of silicon atom-bonded hydrogen atoms in component (B) relative to 1 mole of the total aliphatic unsaturated bonds in the present composition was set at 0.7.

The following component was used as component (A).
(a-1): a branched-chain copolymer of dimethylsiloxane and methyl(3,3,3-trifluoropropyl)siloxane having a viscosity of 820 mPa s, wherein at least two molecular chain terminals are capped with dimethylvinylsiloxy groups and the other molecular chain terminals are capped with trimethylsiloxy groups (a content of vinyl groups = approximately 1.03 mass%).

The following components were used as component (B).
(b-1): a copolymer of dimethylsiloxane and methyl(3,3,3-trifluoropropyl)siloxane capped at both molecular chain terminals with dimethylhydrogensiloxy groups and having a kinematic viscosity of 710 mm²/s (a content of silicon atom-bonded hydrogen atoms = approximately 0.024 mass%)
(b-2): a branched-chain organopolysiloxane with a kinematic viscosity of 7 mm²/s and represented by the following formula:

   CF₃C₂H₄Si[OSi(CH₃)₂H]₃

   (a content of silicon atom-bonded hydrogen atoms = approximately 0.59 mass%)

The following components were used as component (C).
(c-1): a dispersion of a methyl(3,3,3-trifluoropropyl)polysiloxane capped with trimethylsiloxy groups at both molecular chain terminals and having a viscosity of 1,300 mPa s, wherein and the dispersion contains 10 mass% of an encapsulation type catalyst with a glass transition temperature of 54.8°C made by microencapsulating in acrylic resin a 1,3-divinyltetramethyldisiloxane solution of a 1,3-divinyltetramethyldisiloxane complex of platinum (a content of platinum metal = approximately 0.04 mass%)
(c-2): a dispersion of a methyl(3,3,3-trifluoropropyl)polysiloxane capped with trimethylsiloxy groups at both molecular chain terminals and having a viscosity of 1,300 mPa s, wherein the dispesrsion contains 10 mass% of an encapsulation type catalyst with a glass transition temperature of 60.5°C made by microencapsulating in silicone resin a 1,3-divinyltetramethyldisiloxane solution of a 1,3-divinyltetramethyldisiloxane complex of platinum (a content of platinum metal = approximately 0.04 mass%)
(c-3): a dispersion of a methyl(3,3,3-trifluoropropyl)polysiloxane capped with trimethylsiloxy groups at both molecular chain terminals and having a viscosity of 1,300 mPa s, wherein the dispersion contains 10 mass% of an encapsulation type catalyst with a glass transition temperature of 135.1°C made by microencapsulating in polycarbonate resin a 1,3-divinyltetramethyldisiloxane solution of a 1,3-divinyltetramethyldisiloxane complex of platinum (a content of platinum metal = approximately 0.04 mass%)

The following components were used as component (D).
(d-1): a solution of a methyl(3,3,3-trifluoropropyl)polysiloxane with both molecular chain terminals capped with trimethylsiloxy groups and having a viscosity of 1,300 mPa s, wherein the solution contains 7.88 mass% of a silylated acetylene compound represented by the following formula: 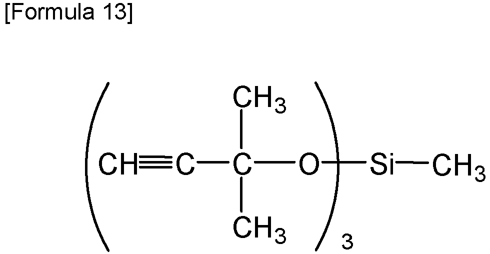
(d-2): 1-ethynyl-cyclohexan-1-ol

The following component was used as component (E).
(e-1): an adhesion promoting agent containing a reaction product of a copolymeric oligomer of dimethylsiloxane and methylvinylsiloxane capped at both molecular chain terminals with silanol groups and having a viscosity of 20 mPa·s (a content of vinyl groups = 10.9 mass%) and 3-glycidoxypropyl trimethoxysilane at a molar ratio of 1:2.2.

The following components were used as component (F).
(f-1): a dispersion of 3.75 mass% of copper acetylacetonate and a methyl(3,3,3-trifluoropropyl)polysiloxane capped at both molecular chain terminals with trimethylsiloxy groups and having a viscosity of 1,300 mPa·s
(f-2): a dispersion of 35 mass% of carbon black and a methyl(3,3,3-trifluoropropyl)polysiloxane capped at both molecular chain terminals with trimethylsiloxy groups and having a viscosity of 1,300 mPa·s

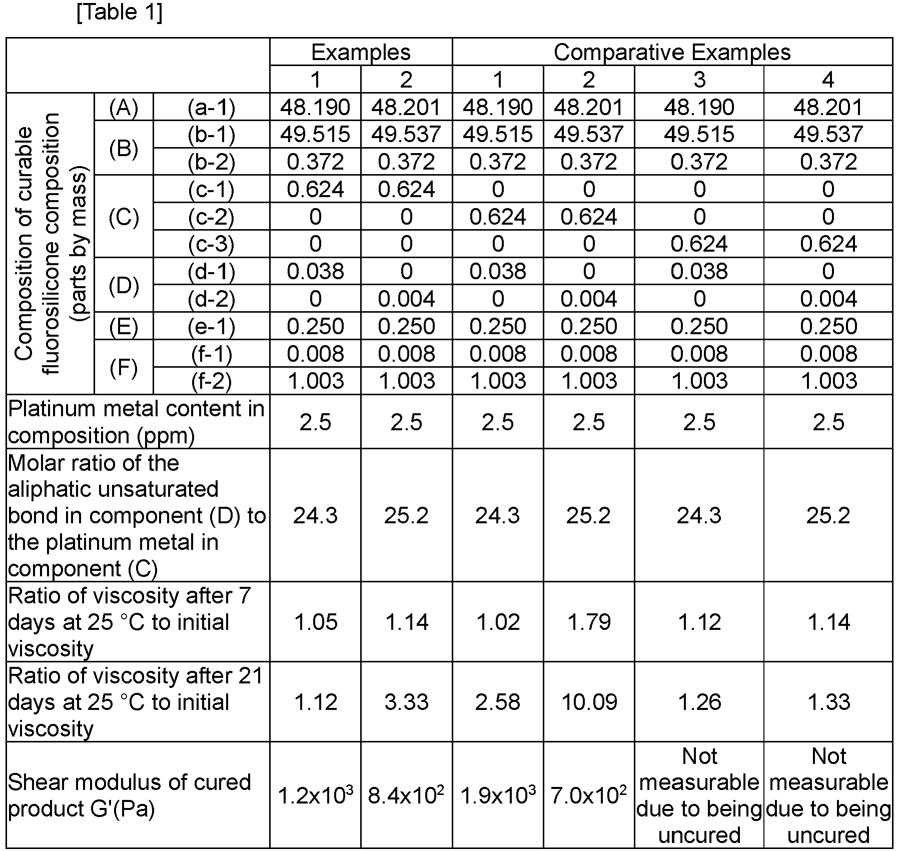

### Industrial Applicability

The curable fluorosilicone composition of the present invention has favorable curability and a sufficient pot life at room temperature, and is therefore suitable, for example, as protective encapsulating material for electrical and electronic components such as integrated circuits; shock absorbing materials; and the like.

## Claims

1. A curable fluorosilicone composition comprising:
(A) 100 parts by mass of an organopolysiloxane having at least two alkenyl groups and at least one fluoroalkyl group having 3 to 12 carbon atoms in a molecule;
(B) an organopolysiloxane having at least two silicon atom-bonded hydrogen atoms and at least one fluoroalkyl group having 3 to 12 carbon atoms in a molecule, in an amount such that the amount of silicon atom-bonded hydrogen atoms in this component is 0.1 to 10 moles relative to 1 mole of a total of aliphatic unsaturated bonds in the present composition;
(C) a platinum group metal-based catalyst for hydrosilylation reaction; and
(D) a hydrosilylation reaction inhibitor having an aliphatic unsaturated bond;
wherein component (C) is an encapsulation type catalyst having an acrylic resin as a wall material, and the amount of platinum group metals in component (C) of the present composition is 0.1 to 100 ppm by mass, and the molar ratio of the aliphatic unsaturated bond in component (D) to the platinum group metals in component (C) is 1 to 100.

2. The curable fluorosilicone composition according to claim 1, wherein component (A) contains a branched-chain organopolysiloxane having alkenyl groups bonded only to silicon atoms at the molecular chain terminals.

3. The curable fluorosilicone composition according to claim 1, wherein component (B) contains an organopolysiloxane having hydrogen atoms bonded only to silicon atoms at the molecular chain terminals.

4. The curable fluorosilicone composition according to claim 1, wherein component (B) is a mixture of a straight-chain organopolysiloxane having hydrogen atoms bonded only to silicon atoms at both molecular chain terminals and a branched-chain organopolysiloxane having hydrogen atoms bonded only to silicon atoms at the molecular chain terminals.

5. The curable fluorosilicone composition according to claim 1, wherein component (D) is a silylated acetylene compound.

6. The curable fluorosilicone composition according to claim 1, wherein component (D) is a silylated acetylene compound represented by the following general formula: 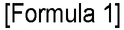 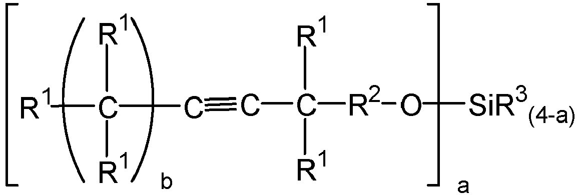
(in the formula, R¹s are the same or different, hydrogen atoms or monovalent hydrocarbon groups, R² is a linking group or an alkylene group, R³ is an alkyl group, an alkenyl group, or an aryl group, "a" is an integer from 1 to 4, and "b" is an integer from 0 to 5);
a silylated acetylene compound represented by the following general formula: 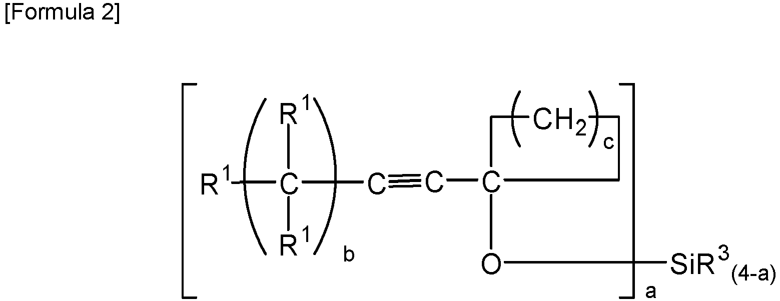
(in the formula, R¹, R³, "a", and "b" are the same as described above, and "c" is an integer from 4 to 6);
or a mixture thereof.
